# EUROPEAN PATENT APPLICATION

(11) **EP 4 501 687 A1**
(43) Date of publication of application: **05.02.2025**
(21) Application number: 24187984.0
(22) Date of filing: 11.07.2024
(51) Int. Cl.: B60L 5/42, B60L 53/10

(54) **CHARGING DEVICE FOR FAST CHARGING SYSTEMS OF ELECTRICALLY POWERED VEHICLES AND FAST CHARGING SYSTEM**

(30) Priority: 31.07.2023 PL 44571823
(71) Applicant: EC Engineering Spólka Z Ograniczona Odpowiedzialnoscia, 30-150 Krakow (PL)
(72) Inventor: Lasiewicz, Bartosz, 31-261 Krakow (PL)
(74) Representative: AOMB Polska Sp. z.o.o.

(57) **Abstract**

The invention relates to a charging device (1, 2) for fast charging systems of electrically powered vehicles, comprising an elongated body (11, 21) having a longitudinal charging channel (111, 211) terminated with openings for inserting and/or removing the contact device (31) into and/or from the charging channel (111, 211), and electrical contacts (121, 122, 123, 221, 222, 223) in the form of strip-like conductive surfaces extending along the charging channel (111, 211) and configured to form electrical conductive pairs with point electrical contacts (311) of the contact device (31), wherein an at least one longitudinal insulating groove (114, 214) runs between the adjacent electrical contacts (121, 122, 123, 221, 222, 223).

## Description

### Technical field

The present invention relates generally to fast charging systems for electrically powered vehicles. More particularly, the invention relates to a charging device as a component of a charging station for maintenance-free charging of electrically powered vehicles by connecting a complementary contact device which is part of a current collector installed on a vehicle. The invention is intended in particular for urban and suburban buses with electric or hybrid drive.

### Background art

Charging stations are usually part of the transport infrastructure and allow maintenance-free and fast charging or recharging of an electric vehicle by connecting a current collector installed on a roof of a vehicle. Charging stations are designed to charge electric vehicles, hybrid vehicles or any type of other electric vehicles equipped with electrical energy storage devices, such as batteries or supercapacitors.

The Polish patent Pat.230883 discloses a fast charging system comprising a current collector and a charging station located within the bus stop. The charging station has the form of a longitudinal charging channel with a guide funnel for the electrical connection of the sliding element of the current collector, located essentially in the direction of the longitudinal axis of the vehicle. The charging station has longitudinal power strips as well as grounding and communication strips. These strips are attached to the internal surfaces of the station, typically laminated. The station, by means of a funnel-shaped structure at its front, guides the contact head of the current collector placed on the bus and connects the contacts on the station to the contacts on the head. The station consists of a closed laminate structure with recesses for strips and flat surfaces enabling the head to be guided. This document also discloses a typical current collector in the form of a pantograph with a contact device, which has the form of a head with movable electrical contacts installed on a swinging arm, which is bearing-mounted in a frame that is electrically insulated from the roof of the vehicle.

The European patent EP3324496 discloses a charging device constituting a component of a charging station to which a complementary contact device (current collector) is connected. The charging device has a trapezoidal shape with an open bottom, comprising current contacts on the side walls, and communication contacts and a ground contact on the upper wall. The device is a laminate structure, smooth on the guidance side, which allows the head to slide. In its upper part, which is not involved in the guidance process, the device has a stiffening structure consisting of laminate ribs.

Known solutions often do not provide sufficient certainty that the contact device will be properly connected, and are also sensitive to weather conditions and difficult to maintain. Charging devices are installed in an outdoor environment, and thus they are exposed to weather conditions. Any accumulation of water, ice and moisture negatively affects the insulation of the charging devices. A decrease in the insulation level results in the control system detecting this situation and disconnecting the system. This operation is correct, as it ensures the safety of both the equipment and the occupants of the vehicle. From the user's point of view, however, disconnecting the system is disadvantageous and causes delays and downtime.

Various methods are known in the art to improve the insulation in a humid environment. One of the solutions is the use of a heating system for charging devices or contacts alone. However, the disadvantage of this solution is the need to use an additional power source, and therefore energy loss. Another way to increase the insulation are chemicals that improve the insulation properties. The disadvantage of chemicals, in turn, is the lack of durability of the effects of their use. Chemicals wear out quickly as a result of abrasion, washing, dilution or loss of properties over time. This makes it necessary to carry out additional maintenance work, for example, periodically apply insulating coatings on charging devices.

### Summary of the invention

The objective of improving the insulation of charging devices while ensuring low manufacturing and operating costs and ease of maintenance is achieved by using insulating grooves.

According to the first invention, a charging device for fast charging systems of electrically powered vehicles, configured to cooperate with a complementary contact device to create an electrical conductive connection, comprises
an elongated body having a longitudinal charging channel terminated with openings for inserting and/or removing the contact device into and/or from the charging channel,
electrical contacts in the form of strip-like conductive surfaces extending along the charging channel and configured to form electrical conductive pairs with point electrical contacts of the contact device,
wherein an at least one longitudinal insulating groove runs between the adjacent electrical contacts.

In one embodiment, the charging device has a communication contact and a ground contact, preferably located between the current contacts.

In another embodiment, the charging channel is delimited by side walls and a central wall connected to the side walls, where the side walls extend divergently downwards. The charging channel then has an essentially V-shaped cross-section or, more precisely, a trapezoidal cross-section.

In another embodiment, at least one power contact is located on the side wall.

In yet another embodiment, the communication contact and the ground contact are located on the central wall.

In a preferred embodiment, two power contacts are separated from the communication contact and the ground contact by the longitudinal insulating groove.

In yet another embodiment, the at least one longitudinal insulating groove is located between the central wall and the side wall.

Preferably, the at least one longitudinal insulating groove runs parallel to the at least one power contact.

In yet another embodiment, the charging device has an at least one transverse insulating groove located behind the ends of the electrical contacts, transverse to the longitudinal axis of the charging channel.

The charging device has preferably two transverse insulating grooves located behind the ends of the electrical contacts.

In one embodiment, the charging channel has a funnel-shaped part for guiding the contact device of the current collector.

In one embodiment, the charging device is provided with covers at the upper part.

In one embodiment, the charging device is provided with current connections, preferably protected by shielding elements.

In one embodiment, the charging device is provided with a mounting bracket.

According to the second invention, a fast charging system for an electrically powered vehicle comprises a current collector with a contact device and a charging station with a charging device according to the first invention.

### Advantageous effects of the invention

Due to an appropriate shaping of the charging device, the present invention allows to easily create an electrical connection with the contact device of the fast charging system and maintain charging in all weather conditions. An advantageous effect of the invention is to provide increased electrical insulation of the connection of both devices by eliminating or reducing the phenomenon of insulation loss, which allows to maintain the ability to charge in difficult weather conditions. Further, the device according to the invention is low-cost and easy to maintain and at the same time reduces the likelihood of non-connection or incorrect connection to the current collector. The solution according to the invention does not require the use of additional power supply and reduces the amount of necessary maintenance work compared to solutions using chemical coatings.

### Description of the drawings

The invention will be now explained in more details in a preferred embodiment with reference to the accompanying drawings, wherein:
Fig. 1 shows the charging device in the first variant in an external view;
Fig. 2 shows the charging device in the first variant in a view without covers;
Fig. 3 shows the charging device in the first variant in a bottom view;
Fig. 4a shows the charging device in the first variant in a side view;
Fig. 4b shows the charging device in the first variant in a front view;
Fig. 5 shows the fast charging system comprising the charging device in the first variant with connected contact device of the current collector;
Fig. 6 shows the charging device in the second variant in an external view;
Fig. 7 shows the charging device in the second variant in a view without covers;
Fig. 8 shows the charging device in the second variant in a bottom view.

### Detailed description of the preferred embodiment

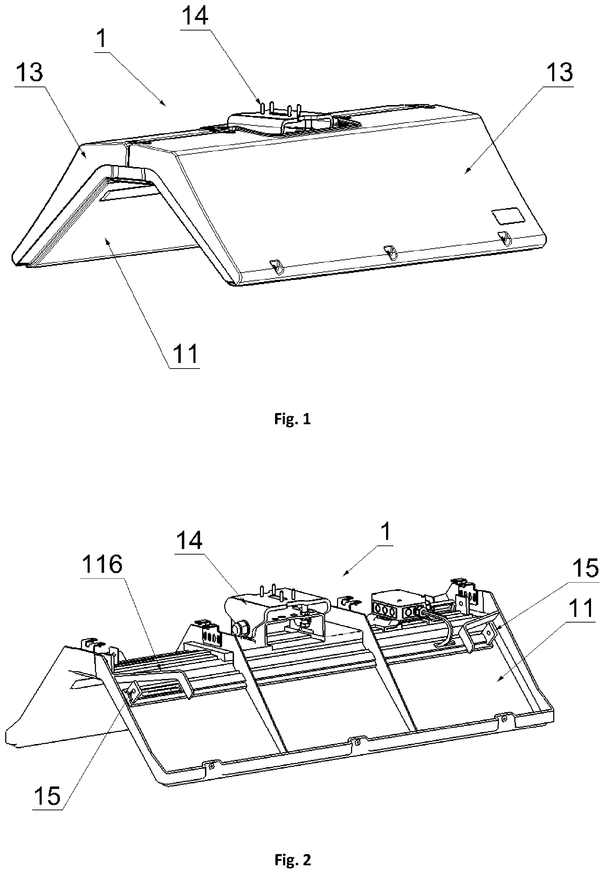

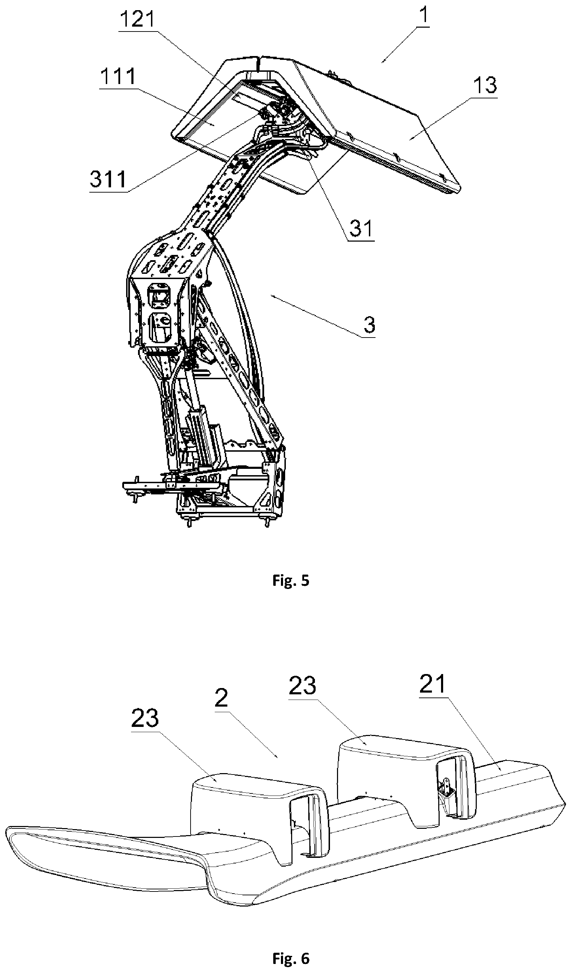

Charging devices, such as that covered by the present application, are most often located near bus stops or at terminal stations. Typically, they take the form of a longitudinal charging channel into which a contact device is inserted, most often in the form of a contact head, mounted at the end of the current collector arm (pantograph) installed on a roof of a vehicle. The contact device of the charging station can be placed on a vertical pole or mast and a transverse beam using a rigid or movable handle. It can also be mounted to a bus shelter. Alternatively, although unusual due to applicable standards, the charging device can be installed on a roof of a vehicle and a complementary contact device can be installed stationary using an appropriate positioning device.
a charging device 1, 2 which is the subject matter of the invention can be made in various variants, i.e., for example, either in a variant with charging contact elements in a substantially straight charging channel along its entire length (Fig. 1 to Fig. 5, variant 1) or in a variant with a longitudinal charging channel and a guide funnel (Fig. 6 to Fig. 8, variant 2). Other variants are also possible, differing generally in shape as a result of the way the contact device is guided to a given station. The charging device 1, 2 generally comprises an elongated body having an elongated charging channel 111, 211 terminated with openings for inserting and/or removing the contact device into and/or from the charging channel 111, 211. Electrical contacts 121, 122, 123, 221, 222, 223 extend along the charging channel 111 in the form of strip-like conductive surfaces, configured to form electrical conductive pairs with point electrical contacts 311 of a contact device 31.

### Variant 1

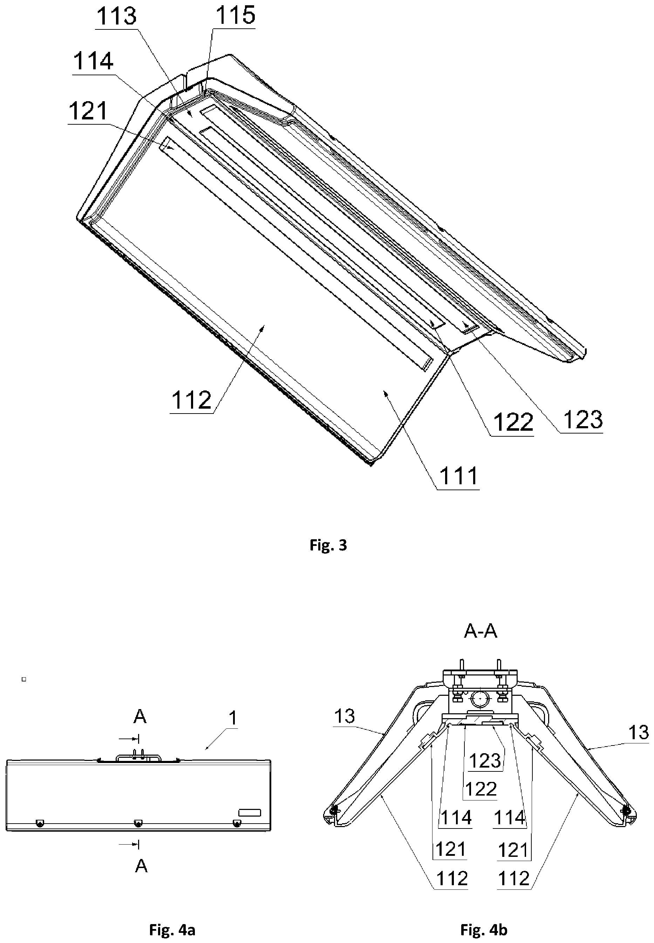

The charging device 1, and more specifically its upper part, is shown in a perspective view in Fig. 1, and in Fig. 2 (without visible covers 13). Fig. 3 shows the charging device 1 in a bottom view, Fig. 4a in a side view, and Fig. 4b in a front view (from its narrower side). Fig. 5 shows in turn the charging device 1 connected to the contact device 31 of the current collector 3.

In the presented embodiment, the charging device 1 has a body 11 made of laminate, an electrical contact assembly comprising two power contacts 121, a communication contact 122 (i.e. a conductive strip for the control contact) and a ground contact 123, covers 13, a mounting bracket 14 and current connections 15. The charging device 1 has a charging channel 111 in a V-shaped cross-section delimited by side walls 112 and a central wall 113. Each side wall 112 is separated from the central wall 113 by a longitudinal insulating groove 114, essentially parallel to the longitudinal axis of the charging channel 111 (i.e., to the direction of travel of the vehicle). The charging station 1 also has transverse insulating grooves 115 located transversely to the longitudinal axis of the charging channel 111, which protect the charging channel 111 from water entering the side edges of the charging device or its ends.

### Variant 2

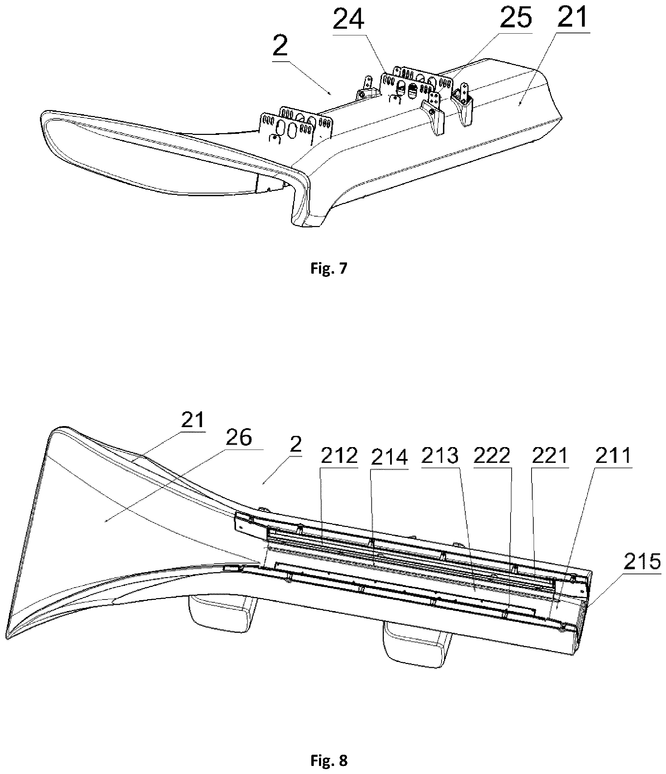

The charging device 2 comprises elements analogous to the first variant, and is shown in a perspective view in Fig. 6, and in Fig. 7 (without covers 23). Fig. 8 shows the charging device 2 in a bottom view.

In this embodiment, the charging device 2 includes a body 21 made of laminate, an electrical contact assembly comprising two current contacts 221, a communication contact 222 (i.e. a conductive strip for the control contact) and a ground contact 223, covers 23, a mounting bracket 24 and current connections 25. The charging device 2 has a charging channel 211 delimited by side walls 212 and a central wall 213. Each side wall 212 is separated from the central wall 213 by a longitudinal insulating groove 214, essentially parallel to the longitudinal axis of the charging channel 211 (i.e., to the direction of travel of the vehicle). The charging station 1 also has transverse insulation grooves 215 located transversely to the longitudinal axis of the charging channel 211, which protect the charging channel 211 from water entering the side edges of the charging device or its ends.

Unlike the first variant of the charging device 1, the charging device 2 according to the second variant has a C-shaped charging channel 211 and a funnel-like part 26, which serves as a guide of the contact device 31 (a head) to the charging channel 211 in order to minimize the risk of missing the contact device 31 or its unclipping due to imprecise bus approach or height difference.

In the following part of the specification, the structure of the charging device and the connection with the contact device 31 of the current collector 3 will be described using the example of variant 1. The following description would be analogous in the case of variant 2, except that the contact device 31 of the current collector 3 in variant 2 would be guided in the funnel-like part 26. It is also possible to adapt the invention to other designs of contact devices.

The charging device 1 is located in the area where the bus stops. The charging device in variant 1 has preferably a trapezoid-shaped charging channel 111. The charging channel 111 is terminated with an input opening for inserting (receiving) the contact device 31 into the charging channel 111 and an output opening for leading the contact device 31 out of the charging channel 111. The charging channel 111 is located parallel to the vehicle's direction of travel of the vehicle, i.e. horizontally.

The side walls 112 of the charging channel 111 have on the inside (from the bottom) an at least one electrical conductive surface, preferably a high current one, which serves as a power contact 121, for example made of copper, in the shape of an elongated strip. In the presented embodiment, these are two power contacts 121 extending along the side walls 112 of the charging channel 111, where one is a positive pole and the other is a negative pole. The power contacts 121 together with the corresponding electrical contacts 311, preferably point ones, of the contact device 31, form electric pairs.

Along the central wall 113 of the channel 111, a communication contact 122 and a ground contact 123 are located on the inner side. These contacts and the power contacts 121 are responsible for the individual poles of the device: the control contact, grounding, positive contact, negative contact. Current is transmitted via wires from the electrical power grid or from any other energy source, e.g. conventional or alternative, to the conductive surfaces - power contacts 121 of the charging device 1. The wires are connected to the contacts at the current connections 15.

The arrangement of electrical contacts 121, 122, 123 may in other embodiments be different than that described above, in particular the charging device 1 may have more power contacts, for example two on each side wall (112, 212).

The bottom surface (i.e. from the side of the charging channel) of the central wall 113 and the side walls 112 is preferably flat, and the electrical contacts 121, 122, 123, 221, 222, 223 are located in the recesses (grooves) of these walls in such a way that they are flush with the bottom surface (it is clearly visible in Fig. 4b).

As mentioned above, the charging device 1 of the invention is provided with the longitudinal insulating grooves 114 separating the power contacts 121 from other contacts (or the current contacts 121 from each other). The longitudinal insulating grooves 114 in the embodiment are located between the central wall 113 and the side walls 112. Preferably, the longitudinal insulating groove 114 is formed along the edge connecting the central wall 113 with the side wall 112. Nevertheless, in other embodiments, the longitudinal insulating groove 114 may be made either in the surface of the central wall 113 only or in the surface of the side wall 112 only. The charging device 1 may also have more insulating grooves, both on the central wall 113 and on the side walls 112.

The longitudinal insulating groove 114 preferably extends over the entire length of the electrical contacts 121, 122, 123, 221, 222, 223, but it is more preferred to have the longitudinal insulating grooves 114 longer than the electrical contacts 121, 122, 123, 221, 222, 223 and extending beyond the ends of the electrical contacts. The longitudinal insulating groove 114 does not need to be a continuous groove - it can also be an arrangement or row of many shorter grooves that are positioned in a row or next to each other in such a way that they partially overlap.

Preferably, the longitudinal insulating groove 114 has a width of approximately 0.5 mm or more. It is obvious that its width cannot be greater than the distance between the opposing edges of the adjacent electrical contacts 121, 122, 123, 221, 222, 223. Most preferably, the width of the longitudinal insulating groove 114 is slightly less than the distance between the opposing edges of the adjacent electrical contacts 121, 122, 123, 221, 222, 223, and the edges of the longitudinal insulating groove 114 are spaced from the edges of the electrical contacts so that they are not in contact with each other. The minimum depth of the longitudinal insulating groove 111 should be approximately 0.5 mm. In general, making a groove below this minimum value could be technologically difficult and could not perform its function. Preferably, the depth of the insulating groove is about 1-10 mm. The invention is not limited to the values indicated herein as long as the groove serves its purpose.

The longitudinal insulating groove 114 may have various shapes. Preferably, the groove has a rectangular or circular cross-section. However, other shapes are also possible, e.g. with trapezoidal or triangular cross-sections.

In the simplest embodiment, the at least one longitudinal insulating groove 114 is formed between the power contact 121 and the ground contact 123, or between the power contact 121 and the communication contact 122. Preferably, at least two such longitudinal insulating grooves 114 are formed between the contacts 121 of different potential, i.e. at both power contacts 121, separating the power contacts from the ground contact 123 and from the communication contact 122. The power supply current for the charging device can be either direct current or alternating current.

The longitudinal insulating groove 114, in the embodiment parallel to the current contacts 121, prevents the formation of a continuous wetted surface between individual contacts (strips) - it prevents the formation of a continuous stream at a moderate water flow. The longitudinal insulating groove 114 is also shaped in such a way that it increases the surface distance between the contacts. By increasing the surface distance between the power contacts 121, the laminate structure has better insulation properties. The longitudinal grooves 114 serve thus as an insulator, extending the surface path between the poles of the power contacts 121 and preventing the formation of continuous bands of moisture, water and ice on the surface of the station between the poles of the power contacts 121.

At least one longitudinal insulating groove 114 in other embodiments may be positioned in another location, for example between the communication contact 122 and the ground contact 123, wherein in each embodiment it is located between the power contacts 121.

As mentioned above, in the embodiment, the charging device 1 also has the transverse insulating grooves 115 positioned transversely to the movement of the electric vehicle (although an embodiment without these transverse insulating grooves 115 is possible). They are preferably located at the beginning and at the end of the charging channel 111, i.e. before and after the electrical contacts (121, 122, 123, 221, 222, 223) (although one transverse insulating groove 115 located closer to the leading edge of the charging device 1 is sufficient). The transverse insulating grooves 115 protect the charging channel 111 against water entering the side edges of the station structure or at its ends - they prevent or reduce the transfer of water from the housings or the upper surface of the charging device 1. The transverse insulating grooves 115 thus serve as a drip edge, which reduces the amount of moisture, water and ice inside the charging channel 111.

The width and depth of the transverse insulating groove 115 are similar to those of the longitudinal insulating groove 114.

Preferably, the points of connection of the current cables 15 to the contacts are protected against direct influence of ice, falling moisture and water flowing from the higher positioned elements of the charging station. For this purpose, as mentioned, the charging device 1 has covers 13. It can also be provided with additional covering elements 116, protecting the current connections 15 against water flowing from the upper parts of the charging station.

The solution of the invention does not exclude the use, additionally, of other methods of increasing insulation, for example heating the contacts or using chemical agents.

Dry surfaces obtained thanks to the presence of the longitudinal insulating grooves 114 and possibly also the transverse insulating grooves 115 are characterized by better electrical insulation properties. Thanks to this, the reliability of the device is greater, the simplicity of solutions does not significantly increase the price of the device, and it also reduces the operating costs. Modification of the charging device of the invention allows for obtaining better electrical insulation properties without the use of additional energy sources. This solution also ensures minimal costs associated with the maintenance of the charging station - the only maintenance requirement is the need to periodically clean the surface of the charging device, which is also necessary in other known solutions.

Referring now to Fig. 5, a fast charging system is shown, comprising a current collector 3 and a charging station with only the charging device 1 visible. Attached to the end of arm of the current collector arm is a contact device 31 which includes complementary electrical contacts 311 for establishing electrical contact with the corresponding electrical conductive surfaces of the charging device 1 located in the charging channel 111. The contact device 31 is preferably in the form of a head having electrical contacts 311 attached to rotatable pressing elements. The electrical contacts 311 may be in the form of carbon caps, carbon fibre caps, brushes, copper strips or other known conductive elements that may be replaceable. The electrical contacts 311 are mounted elastically around the rotation axis and pressed against the strip-like current contacts 121 of the charging device 1, located on opposite sides of the rotation axis of the electrical contacts 311, ensuring continuous cooperation with the charging channel 111 of the charging device 1 at deflections from the vertical and rotation in the horizontal plane. The electrical contacts 311 of the charging device 31 are connected to electrical wires, which supply current to the bus batteries or other electrical devices. In the variant of the charging device 1, when the bus is at the stop within which the charging device 1 is located, a charging process step is performed, consisting in raising the arm with the contact device 31. The devices of the fast charging system can communicate directly with each other after connecting the communication contacts, but also using wireless systems. Then, when the arm is raised to the appropriate height, the contact device 31 is guided to the charging channel 111. This area is most often located in the bus stop bay. When the contact device 31 is inserted into the charging channel 111, the electrical contacts 311 fit properly into the geometry of channel 111 and adhere to the current contacts 121 due to the rotatable connection and the expansion force of the spring. When operating a vehicle, unforeseen situations often arise, for instance when the vehicle cannot perfectly approach the area under the channel, because, for example, the space is blocked by another vehicle, or a road breach has developed, causing the bus to incline on approach. Further, when the door is being opened, the buses are tilted to the side to make it easier for passengers to leave or enter the vehicle. Due to these situations, the current collector 3 arm is mounted in a articulated manner, which allows operation in the vertical and horizontal planes.

## Claims

1. A charging device (1, 2) for fast charging systems of electrically powered vehicles, configured to cooperate with a complementary contact device (31) to create an electrical conductive connection, comprising an elongated body (11, 21) having a longitudinal charging channel (111, 211) terminated with openings for inserting and/or removing the contact device (31) into and/or from the charging channel (111, 211), and electrical contacts (121, 122, 123, 221, 222, 223) in the form of strip-like conductive surfaces extending along the charging channel (111, 211) and configured to form electrical conductive pairs with point electrical contacts (311) of the contact device (31), **characterized in that** an at least one longitudinal insulating groove (114, 214) runs between the adjacent electrical contacts (121, 122, 123, 221, 222, 223).

2. The charging device (1, 2) according to claim 1, **wherein** the device (1, 2) has a communication contact (122, 222) and a ground contact (123, 223), preferably located between the current contacts (121, 122).

3. The charging device (1, 2) according to either claim 1 or 2, **wherein** the charging channel (111, 211) is delimited by side walls (112, 212) and a central wall (113, 223) connected to the side walls (112, 212), wherein the side walls (112, 212) extend divergently downwards.

4. The charging device (1, 2) according to claim 3, **wherein** at least one power contact (121, 221) is located on the side wall (112, 212).

5. The charging device (1, 2) according to either claim 3 or 4, **wherein** a communication contact (122, 222) and a ground contact (123, 223) are located on the central wall (113, 122).

6. The charging device (1, 2) according to any one of claims 2 to 5, **wherein** two power contacts (121, 221) are separated from the communication contact (122, 222) and the ground contact (123, 223) by the longitudinal insulating groove (114, 214).

7. The charging device (1, 2) according to any one of claims 3 to 6, **wherein** the at least one longitudinal insulating groove (114, 214) is located between the central wall (113, 213) and the side wall (112, 212).

8. The charging device (1, 2) according to any one of the preceding claims, **wherein** the at least one longitudinal insulating groove (114, 214) runs parallel to the at least one power contact (121, 221).

9. The charging device (1, 2) according to any one of the preceding claims, **wherein** the device (1, 2) has an at least one transverse insulating groove (115, 215) located behind the ends of the electrical contacts (121, 122, 123, 221, 222, 223), transversely to the longitudinal axis of the charging channel (111, 211).

10. The charging device (1, 2) according to claim 9, **wherein** the device (1, 2) has two transverse insulating grooves (115, 215) located behind the ends of the electrical contacts (121, 122, 123, 221, 222, 223).

11. The charging device (1, 2) according to any one of the preceding claims, **wherein** the charging channel (211) has a funnel-like part (26) for guiding the contact device (31) of the current collector (3).

12. The charging device (1, 2) according to any one of the preceding claims, **wherein** the device (1, 2) is provided with covers (13, 23) at the upper part.

13. The charging device (1, 2) according to any one of the preceding claims, **wherein** the device (1, 2) is provided with current connections (15, 25), preferably protected by shielding elements (116).

14. The charging device (1, 2) according to any one of the preceding claims, **wherein** the device (1, 2) is provided with a mounting bracket (14, 24).

15. A fast charging system for an electrically powered vehicle, comprising a current collector (3) with a contact device (31) and a charging station with a charging device (1, 2) according to any one of claims 1 to 14.
